Europäisches Patentamt

European Patent Office

Office européen des brevets

(19)

(11) Publication number: **0 143 159**
A1

# EUROPEAN PATENT APPLICATION

(21) Application number: **84107623.5**

(22) Date of filing: **02.07.84**

(51) Int. Cl.⁴: **E 04 C 2/26**, E 04 D 3/363

(30) Priority: **04.11.83 IT 8414583**

(43) Date of publication of application: **05.06.85**
**Bulletin 85/23**

(84) Designated Contracting States: **CH DE FR GB IT LI**

(71) Applicant: **METECNO S.p.A., Via Cassino 19,
I-20067 Tribiano (Milano) (IT)**

(72) Inventor: **Tognelli, Giorgio, c/o Metecno S.p.A., Tribiano
(Milano) (IT)**

(74) Representative: **Piovesana, Paolo, Corso del Popolo, 70,
I-30172 Venezia-Mestre (IT)**

(54) **Deeply ribbed sandwich panel provided with a surmounting joint for adjacent panels, and a method for its manufacture.**

(57) The sandwich panel comprises a layer of expanded material which is interposed between two metal sheets and is provided on one of its two longitudinal ends with a rib clad with the corresponding metal sheet and coverable by a bent projecting longitudinal edge of the metal sheet of the adjacent panel. The rib comprises, on that side facing the interior of the panel, a step (8) engageable by the correspondingly bent lip (27) of the projecting edge (7), which covers the rib (6). Moreover, the longitudinal edges of the two sheets (2, 3) are joined together by rigid sections (10, 11) which cover the side edges of the layer of expanded material (4).

EP 0 143 159 A1

This invention relates to a deeply ribbed sandwich panel provided with a surmounting joint for adjacent panels, and a method for its manufacture.

Sandwich panels are known constituted by two faces of profiled sheet metal, between which a layer of insulating material, preferably expanded plastics material, is interposed.

A method is also known for continuously forming said panels, in which two metal strips are passed through suitable forming machines which give them the required shape, in particular by forming longitudinal stiffening ribs. The strips are then advanced in such a manner as to keep them spaced apart by the distance corresponding to the thickness of the panel under formation, a plastics material being introduced between them and expanded to constitute the insulating layer of the panel. When the plastics material expansion process has terminated, the continuous panel thus formed is passed through a cutting station, where it is reduced into finished panels of the required length.

To prevent the expanded plastics material of the panel undergoing damage along its edges by mechanical or chemical action, or as a result of handling to which the panel is subjected before and during its assembly, it is also known to cover said edges with flexible adhesive tape applied during the manufacture of said panels.

Such panels are used for constructing roofs and walls. As the dimensions of said roofs and walls are always greater than the width of the individual panels, it is necessary to dispose them side-by-side in the required number. For this purpose, known panels must be provided at their mutually contacting edges with joints which ensure mechanical stability, a seal against water and air, and a satisfactory thermal insulation. All this is currently accomplished by suitable profiling of the two metal sheets which define each panel, in such a manner that the outer of each of them extends beyond the layer of insulating material and partially surmounts the metal sheet of the adjacent panel. Fixing screws pass through the two panels in these partially overlapping zones of the sheets, and simultaneously join them to the common support structure.

A drawback of these known panels is that their overlapping always leads to a joining gap which besides providing a finish of imperfect appearance, becomes a repository for dust, moisture and atmospheric suspensions. Because of the fact that the edge of the sheet is normally a simply cut edge without protection, any corrosion not only causes damage but emphasises the joining line in an unacceptable manner. On the other hand, it is unthinkable to apply a sealant along this joining line, because the result would be even more visible than the drawback that it overcomes, and would thus be aesthetically unacceptable.

A further drawback of known sandwich panels is that normally there is no rigid mechanical connection between the two sheets which define it, and thus the stability of said sheets is unsatisfactory, in that it is provided only by the adhesive and cohesive effect of the insulation interposed between them, or by the system for fixing the panels to the relative support structure.

An object of the invention is to provide a sandwich panel which enables it to be joined to other panels and to the common support structure without the line along which it is joined to adjacent panels being visible, and thus without the drawbacks related thereto.

A further object of the invention is to provide a sandwich panel which allows a sealing bead to be applied along the joining lines of two adjacent panels, which is completely hidden from view.

A further object of the invention is to provide a sandwich panel for which, even before being fitted to the support structure, the insulating layer is guaranteed to remain unimpaired even as a result of repeated handling and/or stressing to which it can be subjected before and/or during its assembly.

A further object of the invention is to provide a sandwich panel which ensures a stable mechanical connection between the two metal sheets which bound it.

These and further objects which will be apparent from the description given hereinafter are attained according to the invention by a deeply ribbed sandwich panel provided with a surmonting joint for adjacent panels, of the type comprising a layer of expanded material which is interposed between two metal sheets and is provided on one of its two longitudinal ends with a rib clad with a corresponding rib of sheet metal and coverable by a bent projecting longitudinal edge of the metal sheet of the adjacent panel, characterised in that said rib comprises, on that side facing the interior of the panel, a step engageable by the correspondingly bent lip of said projecting edge, which covers said rib, the longitudinal edges of the two sheets being connected together by rigid sections which cover the side edges of the layer of expanded material.

−5−

Advantageously, at least one of the two sections which connect together the two metal sheets and which protect the side edges of the layer of expanded material can be provided with soft gaskets which, when the panels are coupled together, adhere to the corresponding section of the adjacent panel.

Again according to the invention, the rib of a panel can comprise a surface strip which is traversed by the screws for fixing to the support structure, and which is spaced-apart from the corresponding strip of the adjacent panel rib, to define with this latter a compartment for housing the head of said screws, which do not pass through said rib and are hidden from view thereby.

In a preferred embodiment, the side edges of each panel can have a profile suitable for their mutual insertion, whereby the edge of a panel which is not yet fixed to the support structure is engaged by the adjacent panel fixed to said structure, so that both panels are prevented from making movements orthogonal to the plane which contains them.

Some preferred embodiments of the present invention are described hereinafter by way of non-limiting example, with reference to the accompanying drawings, in which:

Figure 1 is a cross-section through two panels according to the invention joined together along their adjacent longitudinal edges;

Figure 2 is a detailed view of Figure 1 to a greater scale, showing the connection joint between the two panels;

Figure 3 shows a second embodiment in the same view as Figure 2;

Figure 4 shows a third embodiment in the same view as Figure 2;

Figure 5 shows a fourth embodiment in the same view as Figure 2;

Figure 6 shows a fifth embodiment in the same view as Figure 2;

Figure 7 is a diagrammatic side view showing the method for constructing the panels of Figures 1 to 6; and

Figure 8 is a diagrammatic plan view thereof.

As can be seen from the figures, the panel according to the invention, indicated overall by 1, is of the deeply ribbed type, ie with stiffening ribs having a height comparable with the thickness of the panel. It is constituted by two metal sheets 2 and 3, between which there is interposed a layer of expanded plastics material 4, of known type. The sheets 2 and 3 of each panel 1 are provided with a plurality of internal longitudinal grooves 5 of small depth relative to the panel thickness, and the outer sheet 2, which on the drawings constitutes the upper sheet of the panels 1, is also provided with two marginal end ribs 6 and 7 of height greater than the panel thickness. Although not expressly indicated on the drawings, other similar ribs can also be provided on the panel, between the ribs 6 and 7.

Although the marginal rib 6 which is shown on the left in the drawings is completely filled with the same expanded material 4, the marginal right hand rib 7 is not, so as to make it possible to connect together two adjacent 1,1' by surmounting, as will be apparent hereinafter.

The overall cross-section through the two coupled ribs 6 and 7 is substantially a trapezium, with the two inclined sides pertaining respectively to the two separate ribs 6 and 7 comprising a small step 8 and 9 respectively, which projects outwards.

At the two marginal ribs 6, 7, the panel according to the invention is provided with two sections 10,11 of rigid plastics material, of suitable configuration for their stable engagement with the sheets 2 and 3, and arranged to perform various functions, these functions in particular

-8-

being to contain the expanded material 4 during formation of the panel, to protect it during its storage, transportation and assembly, and to mechanically connect together the two sheets 2 and 3. As can be seen from the drawings, the section 10 engages the edges of the two sheets 2 and 3, whereas the section 11 engages the edge of the (lower) inner sheet 3 and the step 9 provided in the rib 7 of the outer sheet 2. This is because the lip of said sheet 2 must be free to engage the step 8 of the rib 6 of the adjacent panel.

As stated, the sections 10 and 11 are constructed of rigid plastics material by a conventional extrusion process. They can also be provided with tubular portions 12 or hanging portions 13, co-extruded in soft plastics material and arranged to ensure sealing against the corresponding respective section 11 or 10 of the adjacent panel.

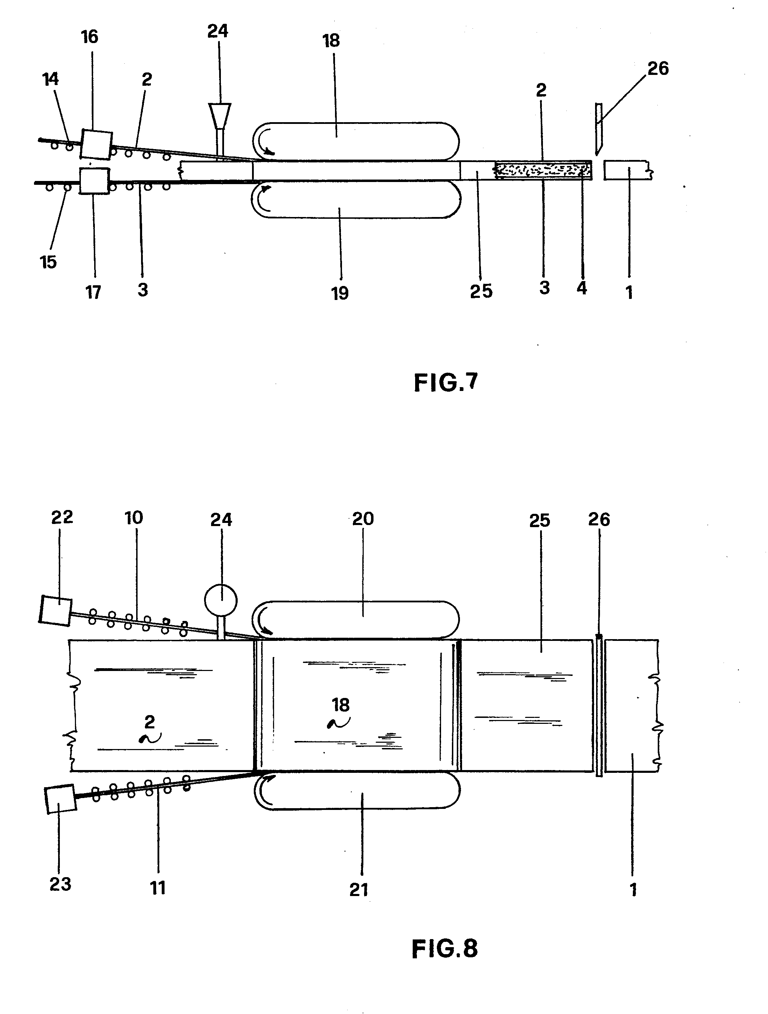

In the manufacture of the panel according to the invention, shown diagrammatically in the two figures 7 and 8, two metal strips 14 and 15 are fed to two forming machines 16 and 17, from which they leave as continuous strips 2 and 3 comprising the grooves 5 and ribs 6 and 7. They are then made to converge until spaced-apart by a distance corresponding substantially to the thickness of the panel to be obtained, and defined by a press comprising forming belts 18, 19, driven at a speed equal to the feed speed of said strips 2 and 3. The press compartment bounded upperly and lowerly by the forming belts 18 and 19 is bounded laterally by a further two vertical forming belts 20 and 21 driven at the same speed as the horizontal belts 18 and 19 and acting on the sections 10 and 11 which leave extruders 22 and 23 at the said speed.

Upstream of the parallelepiped compartment defined by the press forming belts 18, 19, 20, 21 there is introduced, by means of a conventional apparatus 24, a suitable chemical product able to expand within said strips. This chemical product is then made to expand preferably by heating one of the strips 2 and 3, so that the expanding process becomes substantially completed within the press, from which leaves a continuous panel 25 bounded upperly and lowerly by the metal strips 2 and 3 and laterally by the sections 10 and 11. The continuous panel 25 is then cut into required lengths in a cutting station indicated diagrammatically by 26 in Figures 7 and 8.

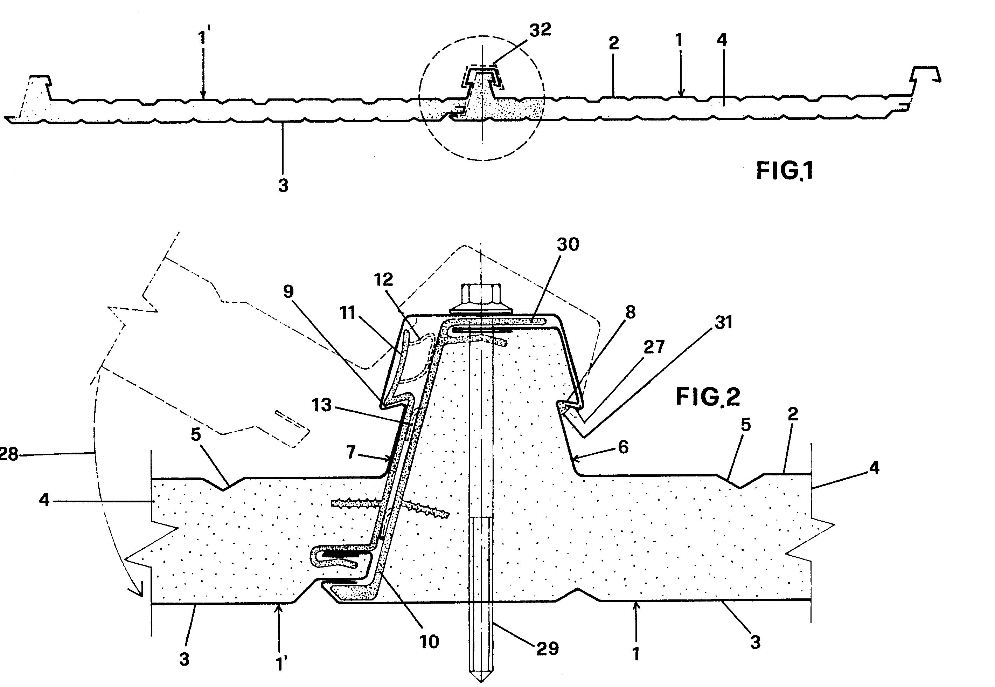

In order to form a roof or wall, each panel 1 is firstly rested against a support structure, the adjacent panel 1' is then brought close, and while holding it inclined to the panel 1 (see dashed lines in Figure 2) the bent lip 27 of its rib 7 is made to engage with the step 8 of the rib 6 of the panel 1. It is then rotated in the direction of the arrow 28 of Figure 2 so that it becomes coplanar with the panel 1 in such a manner that its rib 7 completely covers the rib 6 of the adjacent panel 1. Having attained coplanarity between the two panels 1 and 1', in which state the gaskets 12 and 13 provided in one of the two sections 11 adhere elastically in a sealed manner to the adjacent section 10, both panels 1,1' are fixed to the support structure by applying screws 29 which pass through the two sheets 2 and 3 at the ribs 6 and 7 and through the expanded material covered by the rib 6. For stability of connection, it is preferable for the rigid section 10 which connects together the edges of the two sheets 2 and 3 at this rib, to extend in the form of a flange 30, which is also traversed by the screws 29. The same operations are then repeated with the next panel.

At the end of the operations, a bead of sealing material 31 can be applied along the bent lip 27 of each panel 1' engaged in the corresponding step 8 of the adjacent panel, in order to protect the cut edge of the outer sheet 2 while at the same time being completely hidden from view.

It is thus apparent that the panel according to the invention represents substantial technical progress over currently known panels used for the same purposes, and in particular:

- it completely excludes from view the joining line between the outer sheets 2 and 3 of adjacent panels, while at the same time allowing the application of a bead of sealing material 31, which is also hidden from view;

- it ensures total unimpairing of the expanded material 4 during the storage and handling of the panels before their installation, by virtue of the total protection of said material both by the sheets 2 and 3, and by the sections 10 and 11 along its edges;

- it ensures a stable connection between the sheets 2 and 3, even along their edges, this connection being no longer entrusted merely to the forces of cohesion of the expanded material 4 and to the force of adhesion between the expanded material and the sheet metal, but instead entrusted to the much more effective mechanical connection between the sections 13 and 14 and the sheets 2 and 3;

- if required, it allows the application, preferably by snap-fitting, of brackets 32 indicated by dashed lines in Figure 1, their purpose being to improve the stability of two adjacent panels in the portions between the screws 29;

- it ensures an almost absolute seal at the joints between adjacent panels.

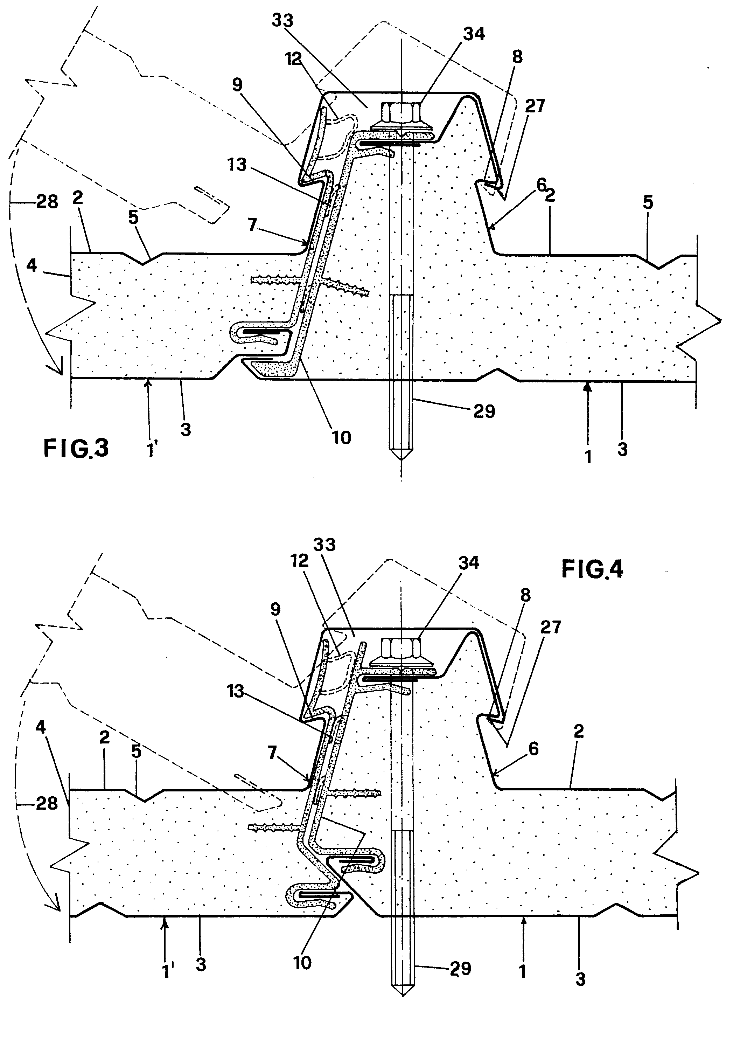

In the embodiment shown in Figure 3, the rib 6 has a strip of its horizontal surface slightly depressed relative to its summit, such that when the two ribs are coupled together it defines, in cooperation with the horizontal surface of the rib 7, a compartment 33 which houses the head 34 of the screws 29. In addition to the advantages of the preceding embodiment, this embodiment offers the further advantage of completely hiding the head 34 of the screws 29 from view, so obtaining an undoubtedly effective result from the aesthetic viewpoint.

In the embodiment shown in Figure 4, the profile of the adjacent panels 1,1' is chamfered so that they fit into each other, by which the panel 1' becomes rigidly locked to the panel 1, and thus to the support structure, including along the edge not directly involved with the screws 29. This on the one hand makes it impossible to remove the panel from the support structure other than in the reverse order to that in which the panels were mounted to form the roof or wall, and on the other hand means that the connection between adjacent panels which are not simultaneously traversed by the screws 29 is not entrusted only to the engagement between the bent lip 27 of the panel 1 and the step 8 of the adjacent panel.

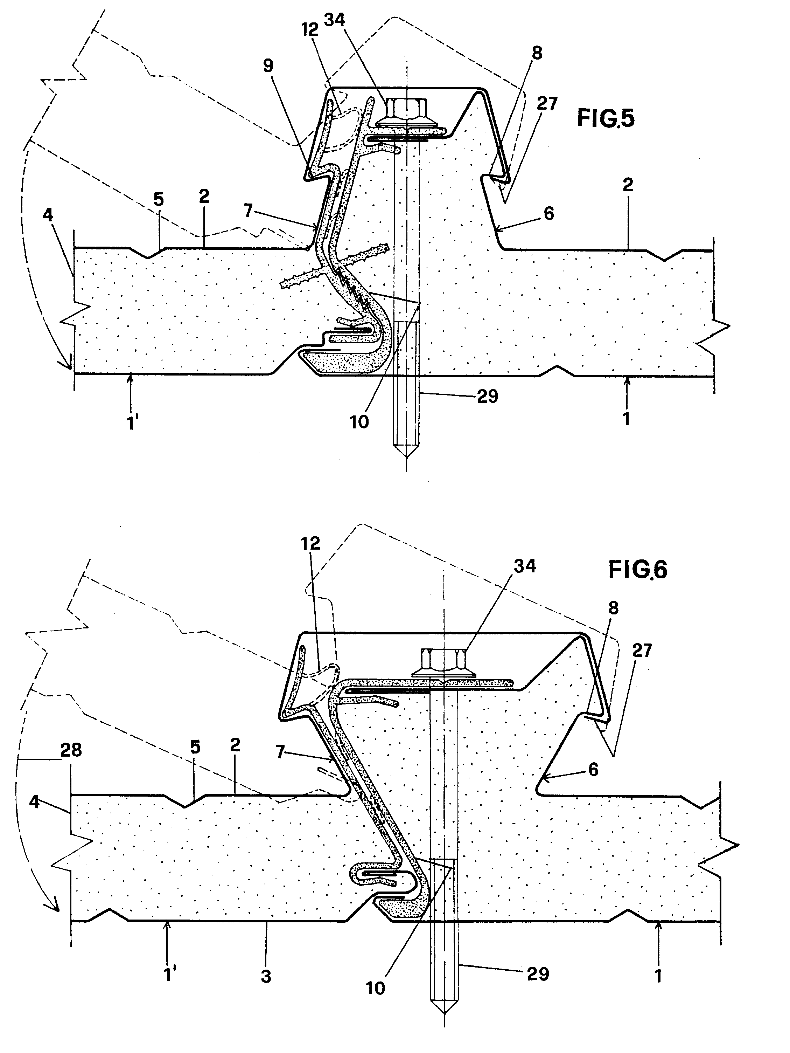

In this particular embodiment it can be advantageous, in order to further improve the connection between adjacent panels, to provide the two sections 10 and 11 with bands which are longitudinally toothed or comprise a saw-tooth or other profile suitable for mutual tangential engagement (see Figure 5).

In the embodiment shown in Figure 6, the overall cross-section through the two coupled ribs 6 and 7 is substantially in the form of an inverted trapezium. This allows more easy access to the zone below the step 8 by a conventional clinching machine which provides a more reliable connection between the bent lip 27 of the rib 7 and the rib 6.

CLAIMS

1.      A deeply ribbed sandwich panel provided with a surmonting joint for adjacent panels, of the type comprising a layer of expanded material (4) which is interposed between two metal sheets (2, 3) and is provided on one of its two longitudinal ends with a rib clad with a corresponding rib (6) of sheet metal and coverable by a bent projecting longitudinal edge (7) of the metal sheet (2) of the adjacent panel (1'), characterised in that said rib (6) comprises, on that side facing the interior of the panel (1), a step (8) engageable by the correspondingly bent lip (27) of said projecting edge (7), which covers said rib (6), the longitudinal edges of the two sheets (2, 3) being connected together by rigid sections (10, 11) which cover the side edges of the layer of expanded material (4).

2.      A panel as claimed in claim 1, characterised in that the projecting edge of the sheet (2) of each panel (1') is bent in such a manner as to form a rib (7) which completely covers the rib (6) of the adjacent panel (1) and forms a step (9) which is substantially symmetrical with the step (8) when the two panels (1,1') are coupled.

3.      A panel as claimed in claims 1 and 2, characterised in that the section (11) which connects together the two sheets (2, 3) at the edge opposite the rib (6) engages with the edge of the sheet (3) and with the step (9) of the sheet (2).

4. A panel as claimed in claim 1, characterised in that at least one of the two sections (10, 11) which connect together the two sheets (2, 3) and protect the side edges of the layer of expanded material (4) are provided with soft gaskets (12, 13) which, when the panels are coupled together, adhere to the corresponding section (11, 10) of the adjacent panel.

5. A panel as claimed in claim 1, characterised in that the edges of the sheets (2, 3) and of the sections (10, 11) are of a configuration suitable for their mutual stable engagement.

6. A panel as claimed in claim 1, characterised in that the section (10) applied to the two sheets (2, 3) at the rib (6) of each panel (1) is provided with a flange (30) which can be traversed by the screws (29) which fix the panel or panels to the support structure.

7. A panel as claimed in claim 1, characterised by comprising brackets (32) which can be snap-fitted to the steps (8, 9) of adjacent coupled panels.

8. A panel as claimed in claim 1, characterised in that the rib (6) comprises a surface strip which is traversed by the screws (29) for fixing to the support structure, and which is spaced-apart from the corresponding strip of the rib (7) of the adjacent panel (1') to define with this latter rib a compartment (33) housing the head of said screws (29), which consequently do not pass through said rib (7) and are hidden from view thereby.

9. A panel as claimed in claim 1, characterised in that the profile of its side edges has a configuration suitable for mutual insertion-fitting, whereby the edge of a panel (1') which is not yet fixed to the support structure is engaged by the adjacent panel (1) fixed to said structure, so that both the panels (1,1') are prevented from making movements orthogonal to the plane which contains them.

10. A panel as claimed in claims 1 and 2, characterised in that in the insertion-fitting zone, the mutually facing bands of the sections (10, 11) are longitudinally toothed, or of saw-tooth or other profile suitable for mutual tangential engagement.

11. A panel as claimed in claim 1, characterised in that, at least in the portion between the step (8) and the surface of the sheet (2), the face of the rib (6) is

0143159

-4-

inclined in such a manner as to form an acute angle with said surface.

12.    A method for constructing panels as claimed in one or more of claims 1 to 11, comprising the following stages:

- continuously feeding at the same speed a first and second profiled sheet metal strip (18, 19) designed to form respectively the outer and inner surface of a continuous panel (25), and causing them to approach each other until they are spaced-apart by a distance corresponding to the final thickness of said panel (25) to be obtained,

- introducing between the two approaching strips (18, 19) a chemical product able to expand,

- causing the expansion of the chemical product between the approached strips (18, 19) so that it substantially fills the interspace defined between them and forms the insulating layer (4),

- simultaneously feeding the strips (18, 19) into a mobile press in order to determine a controlled thickness of the continuous panel (25),

- cutting the continuous panel (25) to size in order to obtain finished panels of the required length, characterised by further comprising the following stages:

- feeding, simultaneously with the two strips (18, 19) and at the same speed thereas, two substantially rigid sections (10, 11) so that they approach each other until spaced-apart by a distance corresponding to the width of the continuous panel (25) to be formed, and

5 - engaging the edges of said sections (10, 11) with the corresponding edges of said strips (18, 19) in order to define a longitudinal cavity in which the formation of the layer of expanded plastics material takes place inside the press.

FIG.1

FIG.2

FIG.3

FIG.4

3/4   0143159

FIG.5

FIG.6

**FIG.7**

**FIG.8**

European Patent
Office

**EUROPEAN SEARCH REPORT**

0143159

Application number

EP  84 10 7623

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 033 949  (CAPE) <br> * page 2, line 88 - page 3, line 13; figures 4-6 * | 1,2 | E 04 C    2/26 <br> E 04 D    3/363 |
| A |  | 3,4,5, 11,13 | |
| | --- | | |
| A | GB-A-1 595 180  (CAPE) <br><br> * page  2,  lines 14-57; figures 2-5 * | 1,6-9, 11,13 | |
| | ----- | | |

TECHNICAL FIELDS
SEARCHED (Int. Cl.4)

E 04 C
E 04 D

The present search report has been drawn up for all claims

| Place of search | Date of completion of the search | Examiner |
|---|---|---|
| THE HAGUE | 06-02-1985 | VANDEVONDELE J.P.H. |